# EUROPEAN PATENT SPECIFICATION

(11) **EP 2 485 523 B1**
(45) Date of publication and mention of the grant of the patent: **22.01.2014**
(21) Application number: 11153397.2
(22) Date of filing: 04.02.2011
(51) Int. Cl.: H04W 24/10

(54) **Cellular terminal gain control for inter-frequency measurements**
Verstärkungssteuerung für zelluläre Endgeräte für Zwischenfrequenzmessungen
Contrôle de gain de terminal cellulaire pour mesures inter-fréquence

(43) Date of publication of application: 08.08.2012
(73) Proprietor: Telefonaktiebolaget L M Ericsson (Publ), 164 83 Stockholm (SE)
(72) Inventor: Baer, Siegfried, 90480, Nürnberg (DE)
(74) Representative: Neuerburg, Gerhard

(56) References cited:
- US-A1- 2007 037 601
- US-A1- 2007 168 326

## Description

### Technical Field

The present invention generally relates to gain controlling in a radio frequency - RF- receiver, and especially relates to gain controlling during inter-frequency measurements within cellular communication networks.

### Background

In many cellular systems, such as GSM, UMTS and so-called advanced mobile networks being specified under a term called Long Term Evolution (LTE) within the Third Generation Partnership Project (3GPP), cell handover mechanism are provided in order to providing a high level of mobility, which is key to advanced cellular systems. Handover decisions are based on measurements on downlink -DL- reference signals sent by the network (base station or eNodeB) and received at the UE (user equipment).

Specifically, LTE standards support transmission gaps in the DL transmission to support the UE for inter-frequency measurements of other cells while DL data transmission to the UE is ongoing. During these gaps, no data is scheduled to the UE by the network, thus offering a possibility to tune the RF receiver to a different frequency for measurements. 3GPP TS 36.133, titled "Requirements for support of radio resource management", current version 8.5.0, specifies the measurement gaps having a length of 6 ms and a periodicity of currently 40 or 80 ms.

One measurement is the so-called Reference Signal Received Power -RSRP-, which is related to an average path gain in downlink and specified in 3GPP TS 36.214 titled "Physical layer - Measurements" (current version 10.0.0.), therein being defined as the linear average over the power contributions of the resource elements that carry cell-specific reference signals within the considered measurement frequency bandwidth. This measurement helps to rank between the different cells as input for handover and cell reselection decisions.

Another measurement being defined in 3GPP TS 36.214 is the so-called Received Signal Strength Indicator -RSSI-, which indicates a received wide band power (including e.g. thermal noise) associated to a selected carrier frequency. The RSSI can be regarded as an indication of the power level being received by the antenna associated to the selected carrier frequency. In other words, RSRP is a measurement related to one specific cell, whereas RSSI is related to a measurement of the power of the sum of the signal of a plurality of cells (+ noise) of the same frequency.

Patent application US2007/037601 A1 discloses a UE using a transmission gap sequence for RSSI measurements for neighbor cells.

The time and frequency positions of these reference signals (RSIGs) within a subframe (1 ms duration) is known by the measuring UE, but the offset between the signals of the same frequency is not known. as the signals transmitted by different base stations (at different frequencies) are not synchronized or bound to each other. Thus, the inter-frequency subframes can be regarded to have an arbitrary time offset to the serving cell and herewith to the timing of the measurement gaps.

The incoming radio frequency signal has a huge dynamic range. In order to cope with this range within a radio frequency -RF- receiver, an automatic gain control is performed in front an analog to digital converter. In order to perform an exact signal evaluation, any gain adaptation should be accounted for. Specifically, the (frequency domain) computation of the RSRP measurements would need to consider any gain change associated to a reception of the reference signals. However such gain consideration might be time and resource consuming (it is to be noted that frequency domain computation of the RSRP measurements require a transformation in the frequency domain usually performed by means of a Fast Fourier Transformation -FFT-).

On the other hand, any gain change occurring during a reference signal reception) not considered in subsequent RSRP calculations (e.g. correlations) would lead to poor detection results.

### Summary

It is an object of the present invention to provide an inter-frequency signal measurement with good detection results.

This object is achieved by the independent claims. Advantageous embodiments are described in the dependent claims.

According to embodiments of the invention, a radio frequency -RF receiver -for receiving a RF signal as part of a cellular network terminal -UE- is repeatedly switched from a first frequency to a second frequency and back to the first frequency to establish consecutive measurement gaps dedicated for receiving neighbor (i.e. inter-frequency) carriers and performing corresponding neighbor cell measurements. A controllable amplifier is controlled adapted to the inter-frequency signal strength in order to obtain good measurement results.

In a further embodiment, the controllable amplifier is set to a predetermined gain value each at the beginning of a measurement gap. A gain value for an actual measurement gap is determined based on signal strength measurements performed during a previous measurement gap (at the same inter-frequency carrier). Consequently, signal strength measurements are performed in the actual measurement gap in order to obtain a new gain value to be used in an upcoming gap the (at the same inter-frequency carrier).

Hence, an efficient gain control during inter-frequency measurements is provided that is sufficiently responsive to actual signal characteristics, but avoiding any gain changes during the inter-frequency measurements. By this, measurement accuracy and hence detection probability can be significantly improved compared to a receiver allowing gain changes at arbitrary time points. This allows especially providing a good RSRP determination as a base for a handover decision.

In an embodiment, the timing of the time gaps is identified from timing information derived from a signal received from a serving cell, the cellular network terminal (UE) is actually attached to. This information might be provided from a baseband processor of the UE to the RF receiver; the communication between the RF receiver and the baseband processor might be performed, by means of a digital interface according to the MIPI Alliance Standard for DigRF v4.

In an embodiment, a gain storage is provided to perform an intermediate storing or buffering of gain values each for a time period between calculating it and applying it to the variable amplifier.

In an embodiment, a digital signal is generated by amplifying an analog signal according to the gain value and converting this signal into a digital signal by means of an analog-to-digital converter, wherein the digital signal can be regarded as a sequence of digital samples.

In an embodiment, the gain values are determined as a function of a signal strength (or power) and quantization characteristics (e.g. number and amount of quantization steps and range) of the analog-to-digital converter. Specifically, the gain values might each determined in response to an anticipated distortion due to the quantization characteristics of the analog-to-digital converter, preferably minimizing a resulting distortion power due to signal clipping and due to signal quantization.

In an embodiment, the signal strength evaluation in each gap is performed as a function of a plurality of signal samples generated by an analog-to-digital converter in response to an amplified signal received from the controllable amplifier and collected in this gap. The signal strength evaluation might be each derived by averaging power values associated each to one of the plurality of signal samples, preferably by establishing a Received Signal Strength Indicator -RSSI- according to 3GPP TS 36.214, version 10.0.0. , section 5.3.1 (explicitly specified for white band and implicitly defined for LTE)

In an embodiment, a baseband signal is generated by down-mixing a selected one of a plurality of carrier frequencies of the RF signal, wherein the baseband signal or any signal derived thereof is provided to the controllable amplifier.

In an embodiment, the RF receiver is a so-called direct conversion -DC-receiver comprising a down-mixer for selecting the carrier frequency out by means of an oscillator signal associated to the selected carrier frequency.

In an embodiment, the plurality of signal samples are consecutive signal samples collected over the whole time gap or within a fraction of the time gap, e.g. within a certain time period at the end of each time gap.

In an embodiment, handover measurements are performed preferably as long as possible within the gap, in order to decide whether to initiate a cell handover or not. Thereto, an average over the power contributions of resource elements carrying cell-specific reference signals within a bandwidth associated to the second frequency (all cells on the second frequency) is performed, preferably a so-called Reference Signal Received Power according to 3GPP TS 36.214, version 10.0.0., section *5.1.1.*

In an embodiment, the RF receiver is consecutively switched to a plurality of (possible) neighbor cell frequencies during consecutive time gaps, and wherein corresponding measurements are compared in order to decide whether to stay connected to the actual cell associated to the first frequency or to any one of the cells associated to the other frequencies. In order to provide an optimum gain control for the neighbor cell measurements, an independent gain control is performed for each frequency. Corresponding sequences of different gain values are determined and kept buffered unit being used in an appropriate one of the upcoming time gaps.

The present invention also concerns computer programs comprising portions of software codes in order to implement the method as described above when operated by a respective processing unit of a user device and a recipient device. The computer program can be stored on a computer readable medium. The computer-readable medium can be a permanent or rewritable memory within the user device or the recipient device or located externally. The respective computer program can be also transferred to the user device or recipient device for example via a cable or a wireless link as a sequence of signals.

In the following, detailed embodiments of the present invention shall be described in order to give the skilled person a full and complete understanding. However, these embodiments are illustrative and not intended to be limiting.

### Brief Description of the Figures

- Fig. 1: shows a block diagram of an exemplary radio frequency receiver being adapted to perform a gain control for inter-frequency measurements according to embodiments of the invention,
- Fig. 2: shows a time diagram with exemplary measurement gaps for inter-frequency measurements,
- Fig. 3: shows a more detailed time diagram of a fraction of the time diagram of Fig. 2,
- Fig. 4: shows a fraction of the block radio frequency receiver of Fig. 1 in more details, and
- Fig. 5: shows steps of an exemplary method for performing a gain control with respect to inter-frequency measurements.

### Detailed Description

In the following description of preferred embodiments, for purposes of explanation and not limitation, specific details are set forth (such as particular signal processing components and sequences of steps) in order to provide a thorough understanding of the present invention. It will be apparent to one skilled in the art that the techniques described herein may be practiced in other embodiments that depart from these specific details.

Moreover, those skilled in the art will appreciate that the functions and steps explained herein below may be implemented using hardware and/or software functioning in conjunction with e.g. a programmed microprocessor, an Application Specific Integrated Circuit (ASIC), or a Digital Signal Processor (DSP). It will also be appreciated that while the following embodiments will primarily be described in context with methods and devices, the invention may also be embodied in a computer program product as well as in a system comprising a computer processor and a memory coupled to the processor, wherein the memory is encoded with one or more programs that may perform the services, functions and steps disclosed herein.

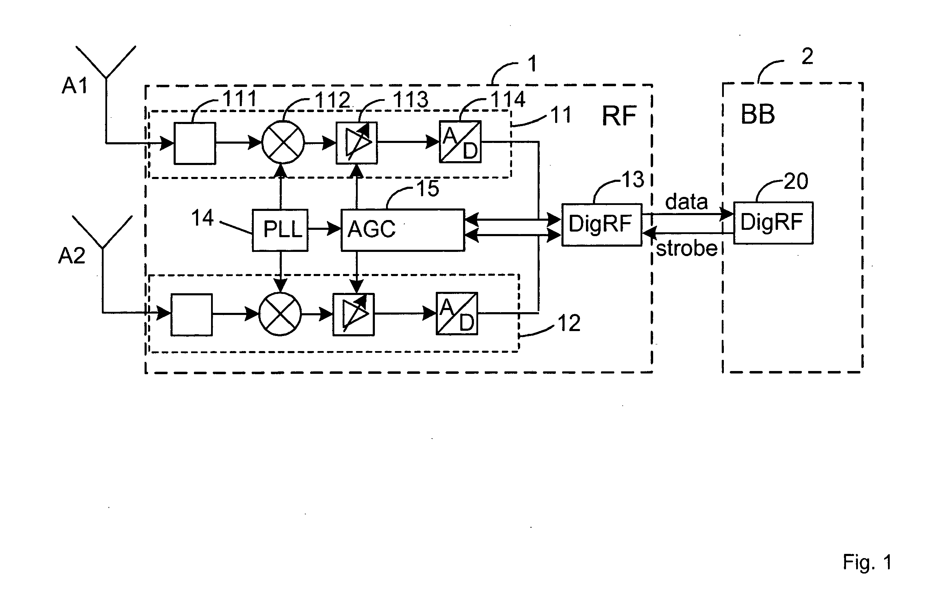

Fig. 1 shows a block diagram covering exemplary principle parts of a mobile terminal or user equipment. Fig. 1 shows an RF receiver 1 and a baseband processor 2. By way of example, the RF receiver 1 comprises two receiver paths 11 and 12, wherein by way of example the first receiver path 11 connected to a first antenna A1 is a main receiver path and the second receiver path 12 connected to a second antenna A2 is an additional receiver path for providing diversity; in other words, the received signals of both receiver parts are combined (by the baseband processor 2) in order to improve the overall reception. By way of example, both paths 11 and 12 share a local oscillator e.g. being realized as a phase locked loop -PLL- 14, and are controlled by a shared gain control circuit, also being referred to as automatic gain control -AGC- 15 and a RF-side digital interface circuit 13. The baseband processor 2 comprises a corresponding BB-side digital interface circuit 20. The BB-side digital interface circuit 20 therein transmits so-called time accurate strobes -TAS- to the RF-side digital interface circuit 13 to control the RF receiver 1, and receives data from the RF-side digital interface circuit 20 for further processing (e.g. comprising the RSRP determination).

The first antenna A1 provides a first RF signal S₁ to the first receiver path 11 and the second antenna provides a second RF signal S₂ to the second receiver path 12.

In the following, only the first receiver path 11 will be discussed in details, as both the first and the second receiver parts have similar tasks and might have similar structures. First receiver path 11 by way of example comprises a bandpass filter 111, a mixer or down converter 112, a variable gain amplifier 113 (also being referred to as controllable gain amplifier 113) and an analog-to-digital converter 114 being connected in series. The first RF signal received by a first antenna A1 is provided to the bandpass filter 111 that generates a bandpass signal S_{BP}. The Mixer 112 receives both the bandpass signal S_{BP} and an oscillator signal generated by the PLL 14, and generates a down-mixed signal S_{BB}, in the following also being referred to as baseband signal S_{BB}. (Not shown here, the bandpass signal might be pre-amplified before being provided to the mixer 112). The variable gain amplifier 113 amplifies the baseband signal S_{BB} corresponding to a first gain control value g₁ received from AGC 15, thereby generating an amplified baseband signal S_{A} to be received by the analog-to-digital converter -ADC- 114.

The analog-to-digital converter -ADC- 114 converts the amplified baseband signal S_{A} into a digital signal S_{D} that is provided to the baseband processor 2 via the RF-side digital interface circuit 13 to the baseband processor 2 for further digital processing. The (first path) gain control value g₁ is thereby determined such that an actual dynamic range of the digital signal S_{D} at is adapted to the characteristics (range) of the ADC 114, or in other words, so that expected distortions due to the signal quantization and signal clipping are minimized.

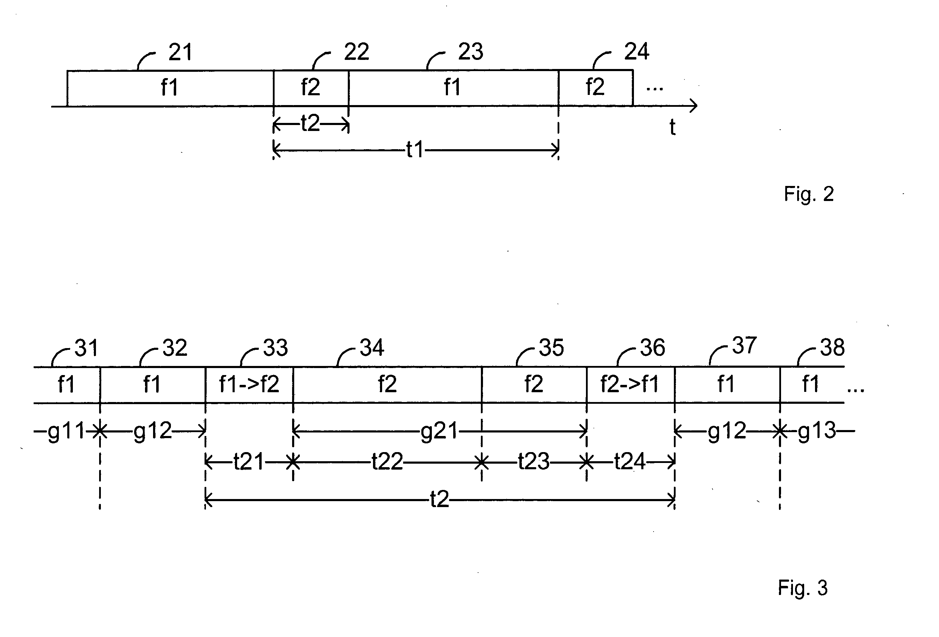

Further, the digital signal S_{D} is provided to the AGC 15 that determines the gain control value g to be provided to the variable gain amplifier 113 by evaluating a signal strength of a number of consecutive digital samples comprised by the first digital signal S_{D}, e.g. above-described RSSI value. The AGC 15 determines the gain control value g in dependence of the signal timing and/or signal structure information and the evaluated signal strength. Further details of the gain calculation will be described referring to the following Fig. 3.

Similarly, the second receiver path 12, having by way of example the same structure as first receiver path 11, generates a second digital signal from the second RF signal S₂ in dependence of a second path gain control value generated by way of example by the same AGC 15.

The baseband processor 2 is in charge of controlling the timing of the RX processing in the RF receiver 1 by means of so-called TAS messages and configuration macros sent over the digital interface (comprising the RF DigRF circuit and the BB DigRF circuit) from the baseband processor 2 to the RF receiver 1.

The digital interface might be realized according to the MIPI Alliance Standard for DigRF v4, Draft Version 0.60.00 r0.04, in the following also being referred to as DigRF4. The concept introduced by DigRF4 comprises first to configure a RF procedure (to be performed by the RF receiver) and then to start this procedure with a TAS message, wherein such TAS message defines an exact timing of when this procedure has to be started.

Fig. 2 shows an exemplary inter-frequency measurement scheme of the UE, when the UE is connected to a serving cell (i.e. in the state or mode RRC_CONNECTED). By way of example, Fig. 2 shows consecutive (time) intervals or (time) periods 21, 22, 23 and 24, wherein first period 21 and third period 23 are time intervals, wherein the RF receiver is tuned to a first frequency for receiving data from the serving cell. Second and fourth period 22 and 24 can be regarded as measurement gaps, wherein the RF receiver is tuned to a second frequency, also being referred to as inter-frequency f2 to perform background cell detection and measurements. By way of example and according to present 3GPP standards, the measurement gaps have a time length t2 of 6 ms and a regular periodicity t1 of 40 ms.

Fig. 3 shows a more detailed view of an AGC handling within one exemplary measurement gap 22, in the following being simply referred to as gap. Fig. 3 shows two consecutive sub frames 31 and 32 representing the last subframes of the first period 21, and further two consecutive subframes 37 and 38 representing the first subframes of the second period 23.

Fig. 3 further shows consecutive phases 33, 34 35 and 36 forming first gap 22. During first phase 33, also being referred to as first switching phase 33, the UE tunes the receiver from the first frequency to the second frequency. In the second phase 34, the UE starts performing a neighbor cell evaluation, e.g. based on above-described RSRP measurements.

During third phase 35, the UE performs a signal strength measurement, e.g. an RSSI measurement as discussed above. By way of example, time duration t23 of third phase 35 is 1ms. Differently to the RSRP evaluation that can only be performed after a certain decoding of the converted signal that is usually performed by a baseband processor, RSSI measurements are performed directly on the samples of the converted signal. As RSSI indicated the sum of the power of all received signal within a selected frequency band, it can be preferably used to determine the amplifier gain in order to match the amplified signal to the analog-to-digital converter.

During fourth phase 36, also being referred to as second switching phase 36, the UE tunes the receiver back to the first frequency.

The gap timing is aligned with the downlink -DL- timing of the serving cell to the UE; that means the last subframe 32 before the gap phases 33- 36, which can contain data assigned to the UE, needs to be received completely and the first subframe 37 after the gap must be received completely, as it might as well contain again data assigned to the UE. In order to be able to completely receive the data of the last subframe and the first subframe after the gap, the switching from the serving cell frequency f1 to the inter-frequency f2 and vice versa is thus to be performed inside the gap.

In this example, it is assumed that the time duration t21 and t24 of frequency switching phases 33 and 36 each take 250 microseconds (us); consequently the net RSRP measurement time t22 and t23 is 5.5 ms. It will be assumed that the last subframe 32 before the gap is received with a first (AGC) gain value g11. This gain value might e.g. be calculated based on measurements (e.g. based on RSSI and/or RSRP measurements) during a previous subframe. A gain update with respect to first gain value g11 resulting in a second gain value g12 might be performed at the beginning of the next subframe 32, preferably during the guard period of the first OFDM symbol. The same gain value g12 is re-used for the reception of the first subframe 37 after the gap.

For performing the RSRP measurement on the inter-frequency f2, a first inter-frequency gain value g21 is set during the frequency switching phase 33 and is kept constant over the whole RSRP measurement phases 34 and 35. This gain value g21 might have been acquired during a preceding gap, e.g. with an initial AGC procedure running at the inter-frequency f2. At the beginning of the next phase 35, in the following being referred to as RSSI measurement phase 35, an RSSI measurement is performed. By way of example, RSSI measurement phase 35 might have a length t23 of 1 ms. Based on this RSSI measurement a new second inter-frequency gain value g22 for is calculated and stored in the UE, but this new gain value is not applied during the ongoing RSRP measurement phase. When the inter-frequency f2 is visited again in the next gap 24, the variable amplifier 113 will be set to this second inter-frequency gain value g22 during the switching period and kept constant for the whole gap.

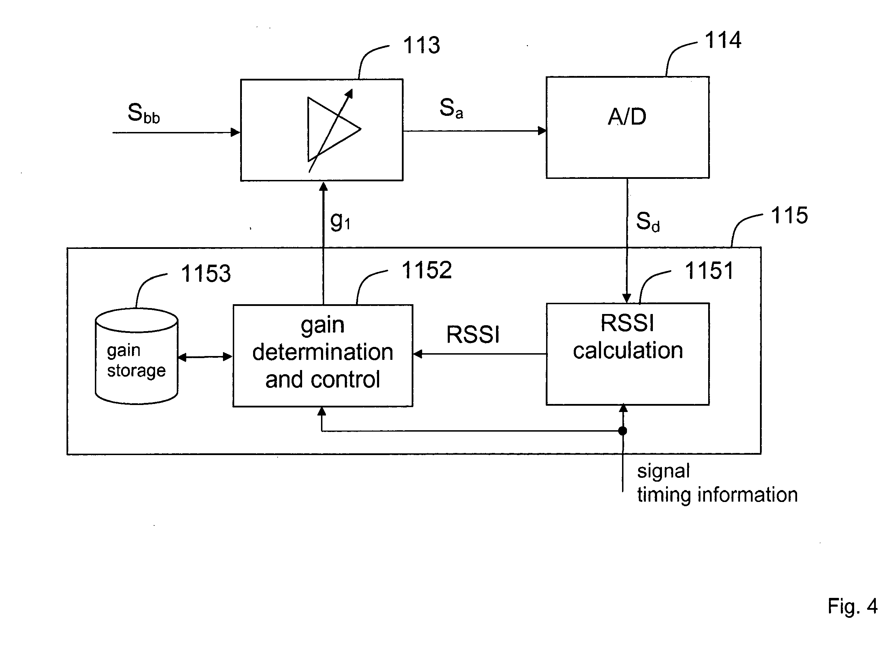

Fig. 4 shows a part of RF receiver 1 in more details in order to describe an embodiment of a gain determination of the inter-frequency measurements. Thereto, Fig. 4 exemplarily shows the variable gain amplifier 113, the analog-to-digital converter 114 and the AGC 115. By way of example, the AGC 115 comprises a signal strength or RSSI determination unit 1151, a gain determination unit 1152 and gain value storage 1153. It is to be noted that these units are being referred to as functional units that might e.g. be realized by means of a processor associated to the RF receiver and corresponding SW code controlling the processor. The functions might be performed entirely by the RF receiver 1or partly by the RF receiver 1and another UE circuit, e.g. partly by the BB processor 2.

In accordance with the description under Fig. 2, the variable gain amplifier 113 generates the amplified baseband signal S_{A} by amplifying the baseband signal S_{bb} according to the actual gain value received from the gain determination unit 1152. This the amplified baseband signal S_{A} is provided to the ADC 114 that converts this signal into a digital signal S_{D} according to certain quantization characteristics. The digital signal S_{D} is fed to the RSSI calculation unit 1151, which evaluates selected signal samples of the digital signal S_{D} in order to determine a signal strength (RSSI) of the inter-frequency signal. Thereto, the RSSI calculation unit 1151: configurations information and signal timing information provided by the baseband processor 2 (over the DigRF interface), so that it is able to identify time periods for the inter-frequency RSSI measurements, e.g. phase 35 shown in Fig. 3. During this time period, the received signal samples are collected and processed in order to obtain a corresponding signal strength indication. This value indicates a received wide band power associated to the selected carrier frequency.

The RSSI value is provided to the gain determination unit 1152 that generates the gain to be applied to the variable gain amplifier 113. The gain control value might thereby determined such that an actual dynamic range of the digital signal S_{D} (indicated by the RSSI) is adapted to the characteristics (range and quantization steps) of the ADC 114, or in other words, so that expected distortions due to the signal quantization and signal clipping are minimized.

As discussed under Fig. 3, the gain value determined as result of the RSSI measurement during a corresponding interval 35 of an actual inter-frequency measurement gap is not used for the actual inter-frequency measurement gap, but for a following measurement gap. Accordingly, the gain value determined on the base of an actual RSSI measurement is stored in the gain value storage 1153 to be applied to the variable gain amplifier 113 e.g. during a frequency switching phase at the beginning of a new inter-frequency measurement gap. Alternatively, the gain values might be stored in any storage of the baseband processor,

A corresponding handling might be used, if a plurality of neighbor cell frequencies other than the serving cell frequency is to be considered. In this case, during different frequencies are to be measured in different measurement gaps. A gain value associated to one of the different inter-frequencies determined in a measurement gap associated to one of the plurality of frequencies is kept stored until a following measurement gap of the same frequency is scheduled. Hence, a corresponding plurality of different inter-frequency gain values is kept stored in the gain value storage 1153.

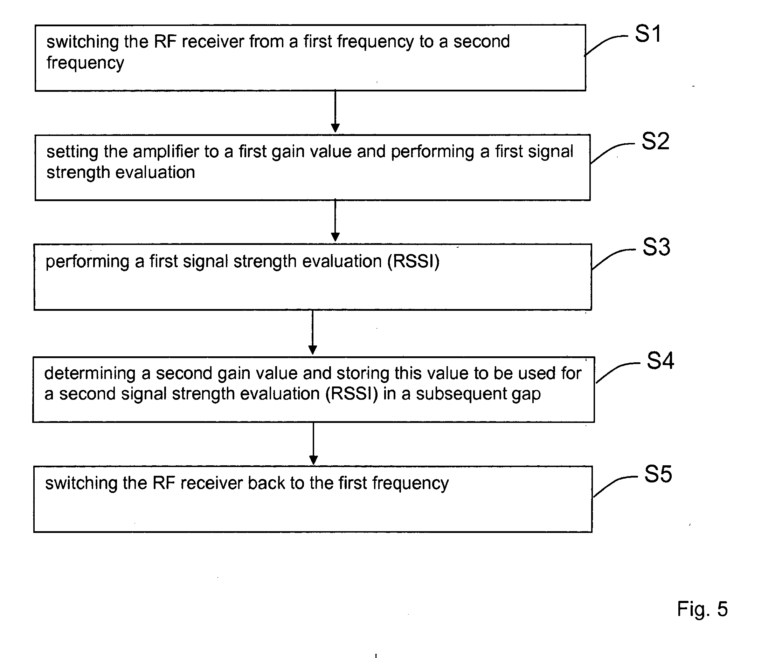

In the following Fig. 5, a sequence of steps of an exemplary method for performing a gain control with respect to inter-frequency measurements according to the above describe RF receiver is shown.

In a first step S1, at the beginning of a first inter-frequency measurement gap, the RF receiver is switched from a first frequency to a second frequency (inter-frequency).

In a second step S2, the amplifier of the RF receiver is set to a first gain value. Now, neighbor cell measurements based on reference signals (e.g. RSRP measurement as discussed above) can be started. The gain value is kept constant until the end of these measurements.

In a third step S3, a first signal strength evaluation (e.g. an RSSI measurement as discussed above) is performed. This measurement can be performed in parallel or after the neighbor cell. Preferably, these measurements are performed in parallel, but started later than the neighbor cell measurements.

In a fourth step S4, a second gain value is performed based on the first signal strength evaluation in step S3. The value might be stored in a gain value storage as discussed above, to be used for a second signal strength evaluation in a subsequent inter-frequency measurement gap (of the same frequency).

In a fifth step S5, at the end of the first inter-frequency measurement gap, the RF receiver is switched back to the first frequency.

## Claims

1. A method of controlling a controllable amplifier (113) of a radio frequency -RF-receiver (1) of a cellular network terminal, UE, wherein the RF receiver is repeatedly switched from a first frequency to a second frequency and back to the first frequency to establish consecutive time gaps (22, 24) dedicated for performing neighbor cell measurements, and wherein the controllable amplifier (113) generates an amplified signal, the method comprising:
- in a first time gap (22), setting the controllable amplifier (113) to a first gain value (g21) and performing a first signal strength evaluation of the amplified signal,
- determining a second gain value (g22) based on the first signal strength evaluation, and
- in a second time gap (24), setting the controllable amplifier (113) to the second gain value for performing a second signal strength evaluation.

2. The method of the preceding claim, wherein the time gaps (22, 24) are derived from timing information comprised in a signal received from a serving cell, the cellular network terminal, UE, is attached to.

3. The method of anyone of the preceding claims, wherein the second gain value (g22) is stored in a gain memory (1153), until it is applied to the controllable amplifier (113) in the second time gap (24).

4. The method of anyone of the preceding claims, wherein the first and second signal strength evaluation is each performed based on a plurality of signal samples generated by an analog-to-digital converter (114) in response to an amplified signal received from the controllable amplifier (113).

5. The method of the preceding claim, wherein the first and second signal strength evaluation is each derived by averaging power values associated each to one of the plurality of signal samples.

6. The method of anyone of the preceding claims 4 and 5, wherein the first and second gain value is each determined in response to an anticipated distortion due to quantization characteristics of the analog-to-digital converter (114).

7. The method of the preceding claim, wherein the determining is performed such that a resulting distortion power due to signal clipping and due to signal quantization is kept minimized.

8. The method of anyone of preceding claims 4 - 7, wherein the plurality of signal samples are consecutive signal samples collected in one of:
- a fraction within each time gap (22, 24), preferably within a certain time period (35) at the end of each time gap (22, 24).
- a time period extending over the entire duration of each gap (22, 24).

9. The method of anyone of the preceding claims, wherein in the time gaps (22, 24), measurements are performed in order to decide whether to initiate a cell handover.

10. The method of the preceding claim, wherein an average over the power contributions of resource elements carrying cell-specific reference signals within a bandwidth associated to the second frequency is performed.

11. The method of anyone of the preceding claims 9 and 10, wherein the receiver is consecutively switched to the second frequency and a third frequency in consecutive time gaps, and wherein corresponding measurements are compared in order to decide whether to stay connected to the actual cell associated to the first frequency or to any one of the cells associated to the second and the third frequency.

12. The method of the preceding claim, wherein for each of the second and the third frequency, an independent gain control is performed, and corresponding different gain values are each kept stored to be applied at a following upcoming time gap associated to the corresponding frequency.

13. The method of any one of the preceding claims, wherein a baseband signal is generated by down-mixing a selected one of a plurality of carrier frequencies of the RF signal, and wherein the baseband signal or any signal derived there from is provided to the controllable amplifier (113).

14. A cellular terminal, UE, comprising a -RF- receiver (1) adapted to be repeatedly switched from a first frequency to a second frequency and back to the first frequency to establish consecutive time gaps (22, 24) dedicated for performing neighbor cell measurements, comprising:
- a controllable amplifier (113) adapted to generate an amplified signal in accordance to a first gain value (g21),
- a signal strength determination unit (1151) adapted for performing a signal strength evaluation in response to the amplified signal received during a first time gap (22) of the consecutive time gaps (22, 24), and
- a gain control and determination unit (1152) adapted for determining a second gain value (g22) based on the signal strength evaluation, and controlling the controllable amplifier (113) to using the second gain value (g22) in a second time gap (24) of the consecutive time gaps (22, 24).

15. A computer program loadable into an RF receiver of mobile terminal, the computer program comprising code adapted to execute the method of any one of the claims 1 - 13.

## Patentansprüche

1. Verfahren zur Steuerung eines regelbaren Verstärkers (113) eines Hochfrequenz-HF-Empfängers (1) eines zellularen Netzendgeräts UE, wobei der HF-Empfänger wiederholt von einer ersten Frequenz auf eine zweite Frequenz und zurück auf die erste Frequenz geschaltet wird, um aufeinanderfolgende Zeitlücken (22, 24) festzulegen, die zum Durchführen von Nachbarzellmessungen bestimmt sind, und wobei der regelbare Verstärker (113) ein verstärktes Signal erzeugt, wobei das Verfahren umfasst:
- Setzen des regelbaren Verstärkers (113) auf einen ersten Verstärkungswert (g21) und Durchführen einer ersten Signalstärkebewertung des verstärkten Signals in einer ersten Zeitlücke (22),
- Bestimmen eines zweiten Verstärkungswerts (g22) basierend auf der ersten Signalstärkebewertung, und
- Setzen des regelbaren Verstärkers (113) auf den zweiten Verstärkungswert und Durchführen einer zweiten Signalstärkebeurteilung in einer zweiten Zeitlücke (24).

2. Verfahren nach dem vorhergehenden Anspruch, wobei die Zeitlücken (22, 24) von Taktinformationen abgeleitet werden, die in einem Signal enthalten sind, das von einer versorgenden Zelle empfangen wird, an die das zellulare Netzendgerät UE angeschlossen ist.

3. Verfahren nach einem der vorhergehenden Ansprüche, wobei der zweite Verstärkungswert (g22) in einem Verstärkungsspeicher (1153) gespeichert wird, bis er in der zweiten Zeitlücke (24) auf den regelbaren Verstärker (113) angewendet wird.

4. Verfahren nach einem der vorhergehenden Ansprüche, wobei die erste und zweite Signalstärkebewertung jeweils basierend auf einer Mehrzahl von Signalabtastwerten durchgeführt wird, die durch einen Analog-Digital-Wandler (114) als Reaktion auf ein verstärktes Signal erzeugt werden, das vom regelbaren Verstärker (113) empfangen wird.

5. Verfahren nach dem vorhergehenden Anspruch, wobei die erste und zweite Signalstärkebewertung jeweils durch Mitteln von Leistungswerten abgeleitet wird, die jeweils mit einem der Mehrzahl von Signalabtastwerten assoziiert sind.

6. Verfahren nach einem der vorhergehenden Ansprüche 4 und 5, wobei der erste und zweite Verstärkungswert jeweils als Reaktion auf eine erwartete Verzerrung infolge von Quantisierungscharakteristiken des Analog-Digital-Wandlers (114) bestimmt wird.

7. Verfahren nach dem vorhergehenden Anspruch, wobei das Bestimmen derart durchgeführt wird, dass eine resultierende Verzerrungsleistung infolge von Signalbegrenzung und infolge von Signalquantisierung minimiert gehalten wird.

8. Verfahren nach einem der vorhergehenden Ansprüche 4 bis 7, wobei es sich bei der Mehrzahl von Signalabtastwerten um aufeinander folgende Signalabtastwerte handelt, die erfasst werden in einer von:
- einer Fraktion innerhalb jeder Zeitlücke (22, 24), vorzugsweise innerhalb einer bestimmten Zeitspanne (35) am Ende jeder Zeitlücke (22, 24),
- einer Zeitspanne, die sich über die gesamte Dauer jeder Lücke (22, 24) erstreckt.

9. Verfahren nach einem der vorhergehenden Ansprüche, wobei in den Zeitlücken (22, 24) Messungen durchgeführt werden, um zu entscheiden, ob ein Zellwechsel eingeleitet werden soll.

10. Verfahren nach dem vorhergehenden Anspruch, wobei eine Mittelwertbildung über die Leistungsbeiträge von Betriebsmittelelementen, die zellspezifische Referenzsignale innerhalb einer Bandbreite übertragen, die mit der zweiten Frequenz assoziiert ist, durchgeführt wird.

11. Verfahren nach einem der vorhergehenden Ansprüche 9 und 10, wobei der Empfänger in aufeinander folgenden Zeitlücken nacheinander auf die zweite Frequenz und eine dritte Frequenz geschaltet wird, und wobei entsprechende Messungen verglichen werden, um zu entscheiden, ob mit der aktuellen Zelle, die mit der ersten Frequenz assoziiert ist, oder mit einer der Zellen, die mit der zweiten und der dritten Frequenz assoziiert sind, verbunden geblieben werden soll.

12. Verfahren nach dem vorhergehenden Anspruch, wobei für jede der zweiten und der dritten Frequenz eine unabhängige Verstärkungsregelung durchgeführt wird und entsprechende Verstärkungswerte jeweils gespeichert gehalten werden, um bei einer nachfolgenden bevorstehenden Zeitlücke, die mit der entsprechenden Frequenz assoziiert ist, angewendet zu werden.

13. Verfahren nach einem der vorhergehenden Ansprüche, wobei ein Basisbandsignal durch Abwärtsmischen einer ausgewählten von einer Mehrzahl von Trägerfrequenzen des HF-Signals erzeugt wird, und wobei das Basisbandsignal oder ein beliebiges Signal, das davon abgeleitet ist, an den regelbaren Verstärker (113) geliefert wird.

14. Zellulares Endgerät UE, umfassend einen HF-Empfänger (1), der so ausgelegt ist, dass er wiederholt von einer ersten Frequenz auf eine zweite Frequenz und zurück auf die erste Frequenz geschaltet wird, um aufeinander folgende Zeitlücken (22, 24) festzulegen, die zum Durchführen von Nachbarzellmessungen bestimmt sind, umfassend:
- einen regelbaren Verstärker (113), der so ausgelegt ist, dass er ein verstärktes Signal gemäß einem ersten Verstärkungswert (g21) erzeugt,
- eine Signalstärkebestimmungseinheit (1151), die so ausgelegt ist, dass sie eine Signalstärkebewertung als Reaktion auf das verstärkte Signal durchführt, das während einer ersten Zeitlücke (22) der aufeinander folgenden Zeitlücken (22, 24) empfangen wird, und
- eine Verstärkungsregelungs- und -bestimmungseinheit (1152), die so ausgelegt ist, dass sie einen zweiten Verstärkungswert (g22) basierend auf der Signalstärkebewertung bestimmt und den regelbaren Verstärker (113) so steuert, dass er den zweiten Verstärkungswert (g22) in einer zweiten Zeitlücke (24) der aufeinander folgenden Zeitlücken (22, 24) verwendet.

15. Computerprogramm, das in einen HF-Empfänger eines mobilen Endgeräts geladen werden kann, wobei das Computerprogramm Code umfasst, der zum Ausführen des Verfahrens nach einem der Ansprüche 1 bis 13 ausgelegt ist.

## Revendications

1. Procédé de commande d'un amplificateur commandable (113) d'un récepteur de radiofréquence RF (1) d'un terminal de réseau cellulaire, UE, dans lequel le récepteur RF est commuté répétitivement d'une première fréquence à une seconde fréquence et de nouveau à la première fréquence afin d'établir des laps de temps consécutifs (22, 24) dédiés à la mise en oeuvre de mesures de cellule voisines, et dans lequel l'amplificateur commandable (113) génère un signal amplifié, le procédé comprenant de :
- dans un premier laps de temps (22), régler l'amplificateur commandable (113) à une première valeur de gain (g21) et effectuer une première évaluation d'intensité de signal du signal amplifié,
- déterminer une seconde valeur de gain (g22) sur la base de la première évaluation d'intensité de signal, et
- dans un second laps de temps (24), régler l'amplificateur commandable (113) à la seconde valeur de gain pour effectuer une seconde évaluation d'intensité de signal.

2. Procédé selon la revendication précédente, dans lequel les laps de temps (22, 24) sont déduites d'une information de synchronisation comprise dans un signal reçu depuis une cellule de desserte à laquelle le terminal de réseau cellulaire, UE, est rattaché.

3. Procédé selon une quelconque des revendications précédentes, dans lequel la seconde valeur de gain (g22) est mémorisée dans une mémoire de gain (1153), jusqu'à ce qu'elle soit appliquée à l'amplificateur commandable (113) dans le second laps de temps (24).

4. Procédé selon une quelconque des revendications précédentes, dans lequel la première et la seconde évaluation d'intensité de signal sont chacune effectuées sur la base d'une pluralité d'échantillons de signal générés par un convertisseur analogique à numérique (114) en réponse à un signal amplifié reçu depuis l'amplificateur commandable (113).

5. Procédé selon la revendication précédente, dans lequel la première et la seconde évaluation d'intensité de signal sont chacune déduites en calculant la moyenne des valeurs de puissance associées chacune à un de la pluralité d'échantillons de signal.

6. Procédé selon une quelconque des revendications précédentes 4 et 5, dans lequel la première et la seconde valeur de gain sont chacune déterminées en réponse à une distorsion anticipée due aux caractéristiques de quantification du convertisseur analogique à numérique (114).

7. Procédé selon la revendication précédente, dans lequel la détermination est effectuée de sorte qu'une puissance de distorsion de résultat due à l'écrêtage de signal et due à la quantification de signal soit gardée minimale.

8. Procédé selon une quelconque des revendications précédentes 4-7, dans lequel la pluralité des échantillons de signal sont des échantillons de signaux consécutifs collectés dans un de :
- une fraction à l'intérieur de chaque laps de temps (22, 24), de préférence à l'intérieur d'une certaine période de temps (35) à la fin de chaque laps de temps (22, 24),
- une période de temps s'étendant sur la durée totale de chaque laps (22, 24).

9. Procédé selon une quelconque des revendications précédentes, dans lequel dans les laps de temps (22, 24) des mesures sont effectuées afin de décider d'amorcer un transfert intercellulaire de cellule.

10. Procédé selon la revendication précédente, dans lequel une moyenne des contributions de puissance des éléments de ressource transportant des signaux de référence spécifiques à une cellule à l'intérieur d'une bande passante associée à la seconde fréquence est effectuée.

11. Procédé selon une quelconque des revendications précédentes 9 et 10, dans lequel le récepteur est commuté consécutivement à la seconde fréquence et une troisième fréquence dans des laps de temps consécutifs, et dans lequel les mesures correspondantes sont comparées afin de décider de rester connecté à la cellule effective associée à la première fréquence ou à une quelconque des cellules associées à la seconde et la troisième fréquence.

12. Procédé selon la revendication précédente, dans lequel pour chacune de la seconde et troisième fréquence, une régulation de gain indépendante est effectuée, et différentes valeurs de gain correspondantes sont chacune gardées mémorisées afin d'être appliquées à un laps de temps à venir suivant associé à la fréquence correspondante.

13. Procédé selon une quelconque des revendications précédentes, dans lequel un signal de bande de base est généré par un mixage réducteur d'une fréquence sélectionnée d'une pluralité de fréquence porteuses du signal RF, et dans lequel le signal de bande de base ou un quelconque signal déduit de ce dernier est fourni à l'amplificateur commandable (113).

14. Terminal cellulaire, UE, comprenant un récepteur RF (1) adapté afin d'être commuté répétitivement d'une première fréquence à une seconde fréquence et de nouveau à la première fréquence afin d'établir des laps de temps consécutifs (22, 24) dédiés pour effectuer des mesures de cellule voisines, comprenant :
- un amplificateur commandable (113) adapté pour générer un signal amplifié conformément à une première valeur de gain (g21),
- une unité de détermination d'intensité de signal (1151) adaptée pour effectuer une évaluation d'intensité de signal en réponse au signal amplifié reçu pendant un premier laps de temps (22) des laps de temps consécutifs (22, 24) et
- une unité de détermination et régulation de gain (1152) adaptée pour déterminer une seconde valeur de gain (g22) sur la base de l'évaluation d'intensité de signal, et commander l'amplificateur commandable (113) afin d'utiliser la seconde valeur de gain (g22) dans un second laps de temps (24) des laps de temps consécutifs (22, 24).

15. Programme informatique chargeable dans un récepteur RF d'un terminal mobile, le programme informatique comprenant du code adapté afin d'exécuter le procédé selon une quelconque des revendications 1-13.
